# EUROPEAN PATENT APPLICATION

(11) **EP 2 546 013 A1**
(43) Date of publication of application: **16.01.2013**
(21) Application number: 10847428.9
(22) Date of filing: 10.03.2010
(51) Int. Cl.: B23C 5/22, B23B 27/16

(54) **CLAMP ASSISTANT MEMBER AND CUTTING TOOL INCLUDING CLAMP ASSISTANT MEMBER**

(71) Applicant: Tungaloy Corporation, Iwaki-shi Fukushima 970-1144 (JP)
(72) Inventor: YOSHIOKA, Shiro, Iwaki-shi Fukushima 970-1144 (JP)
(74) Representative: Vossius & Partner
(86) International application number: PCT/JP2010/054058
(87) International publication number: WO 2011/111198

(57) **Abstract**

There are provided a clamp auxiliary member which is low in manufacturing costs in a simple structure, applicable to a small-diameter tool, and excellent in operability at replacement of a cutting insert, and a cutting tool provided with the clamp auxiliary member. Therefore the cutting insert is mounted to a tool body through the clamp auxiliary member which is provided with an engagement portion with a fastening screw, is formed in a ring shape completely notching a part of the clamp auxiliary member, and is flexibly deformed at the time the force is applied to an inner peripheral face upper portion thereof from the head portion of the fastening screw to expand the outer diameter.

## Description

### Technical Field

The present invention relates to a clamp auxiliary member used upon mounting a cutting insert to a tool body and a cutting tool equipped with the clamp auxiliary member, and particularly to a clamp auxiliary member used for mounting a cutting insert in a cutting tool of a screw-on method in which the cutting insert is fixed to a tool body by a screw and a cutting tool equipped with the clamp auxiliary member.

### Background Art

As to a clamping method of a cutting insert used in a cutting tool, there is known a screw-on method in which a fastening screw is threaded into a screw hole formed in the bottom of a mounting seat in a tool body through a mounting hole provided in the cutting insert, thereby fixing the cutting insert to the tool body. According to this screw-on method, since the cutting insert can be mounted to the tool body by a single screw, the cutting tool of the screw-on method can be inexpensively manufactured in a simple structure. Further, since the tool management in this method is easy to perform, and particularly this method is compact in design, in many cases this method is adopted in an indexable cutting tool in which a space for mounting the cutting insert is limited.

In contrast, in the indexable cutting tool adopting such a screw-on method, the fastening screw has to be completely removed from the screw hole in the mounting seat at replacement of the cutting insert, bringing in an complicated operation and inconvenience. Therefore in a milling cutter having many teeth or the like, long hours are required for replacement of the cutting insert, causing deterioration in work efficiency. Further, since a small fastening screw is used in a case of a tool having a small diameter, at the time an operator removes the fastening screw from the tool body, the operator quite often drops the screw, which is lost. In the indexable cutting tool, since removal of the fastening screw is frequently performed for replacement of the cutting insert, an improvement on operability and work efficiency is greatly demanded.

For solving this problem, Patent Literature 1 proposes an indexable cutting tool which can perform replacement of the cutting insert without complete removal of the fastening screw from the tool body. In Patent Literature 1, a clamp auxiliary member is used upon mounting the cutting insert to the tool body.

The cutting insert can be replaced without removing the fastening screw by using the technology described in Patent Literature 1. Therefore it is possible to shorten replacement hours of the cutting insert, and there is no possibility that the fastening screw is lost due to dropping thereof at replacement.

### Citation List

### Patent Literature

PTL 1: Japanese Patent Laid-Open No. 2008-23643

### Summary of Invention

### Technical Problem

However, the clamp auxiliary member used in Patent Literature 1 is structured in a complicated shape and requires high manufacturing costs of components. In addition, since it is difficult to ensure the space, the clamp auxiliary member is difficult to be mounted to an end mill having a small diameter, and can be applied only to a large-diameter tool.

Therefore an object of the present invention is to provide a clamp auxiliary member and a cutting tool provided with the clamp auxiliary member, which are low in manufacturing costs in a simple structure, applicable to a small-diameter tool, and excellent in operability at replacement of a cutting insert. Solution to Problem

For solving the above problem, a clamp auxiliary member and a cutting tool provided with the clamp auxiliary member according to the present invention adopt the following means.

A clamp auxiliary member in the invention defined in claim 1 includes a ring-shaped main body which, when a cutting insert provided with a mounting hole formed therein is clamped to a mounting seat in a tool body by a bolt inserted into the mounting hole, expands in a diameter between the cutting insert and the bolt to press the cutting insert from an inside thereof, thereby assisting the clamping of the cutting insert by the bolt, the clamp auxiliary member comprising a first engagement portion engaged to a large-diameter portion formed in the bolt and expanding the main body in a diameter by a relative movement to the bolt, a second engagement portion capable of being engaged to a retaining portion provided in the bolt when the main body does not expand in a diameter, and a third engagement portion applying a pressing force to an inner peripheral wall of the mounting hole, wherein when the bolt is threaded into a screw hole provided in the mounting seat in a state where the second engagement portion is engaged to the retaining portion, the clamp auxiliary member makes contact with the mounting seat, which restricts the movement to cause a relative movement thereof to the bolt, the first engagement portion is subjected to a force from the large-diameter portion to be expanded in a diameter, the engagement of the second engagement portion is released simultaneously with the diameter expanding of the first engagement portion, the third engagement portion presses the inner peripheral wall of the mounting hole to clamp the cutting insert to the mounting seat, and when the bolt threaded into the screw hole is loosened, the second engagement portion is returned back to the retaining portion by the recovery force.

The invention defined in claim 2 is characterized in that in a clamp auxiliary member defined in claim 1, the third engagement portion is formed to be capable of allowing at least one of eccentricity between a center axis line of the cutting insert and a center axis line of the screw hole in the mounting seat, and an inclination of the center axis line of the screw hole to a center axis line of the mounting hole in the cutting insert fixed to the mounting seat.

The invention defined in claim 3 is characterized in that in a clamp auxiliary member defined in claim 2, the third engagement portion is formed as a curved surface curved in a convex shape to the inner peripheral wall of the mounting hole in the cutting insert.

A cutting tool defined in claim 4 comprises a cutting insert provided with a mounting hole, a tool body provided with a mounting seat, a bolt for clamping the cutting insert to the mounting seat of the tool body, and a clamp auxiliary member provided with a ring-shaped main body which is, when the cutting insert is clamped to the mounting seat in the tool body by the bolt, interposed between the cutting insert and the bolt to flexibly expand in a diameter therebetween to assist the clamping of the cutting insert by the bolt, wherein the bolt comprises a retaining portion for retaining the clamp auxiliary member in a state where the clamp auxiliary member is not expanded in a diameter, and a large-diameter portion for expanding the clamp auxiliary member in a diameter, and the clamp auxiliary member comprises a first engagement portion engaged to the large-diameter portion formed in the bolt and expanding the main body in a diameter by a relative movement to the bolt, a second engagement portion capable of being engaged to the retaining portion in the bolt, and a third engagement portion capable of making contact with an inner peripheral wall of the mounting hole in the cutting insert at the time of being expanded in a diameter by the large-diameter portion, wherein when the bolt is tightened, the clamp auxiliary member moves together with the bolt in a state where the second engagement portion is engaged to the retaining portion, the clamp auxiliary member makes contact with the mounting seat, which restricts the movement to cause a relative movement thereof to the bolt, thereby the engagement of the second engagement portion is released and the first engagement portion is subjected to a force from the large-diameter portion to be expanded in a diameter to clamp the cutting insert to the mounting seat, and when the bolt tightened into the mounting hole in the cutting insert is loosened, the second engagement portion is returned back to the retaining portion by the recovery force.

### Advantageous Effects of Invention

The clamp auxiliary member in the present invention comprises a first engagement portion engaged to a large-diameter portion formed in the bolt and expanding the main body in a diameter by a relative movement to the bolt, a second engagement portion capable of being engaged to a retaining portion provided in the bolt, and a third engagement portion applying a pressing force to an inner peripheral wall of the mounting hole, wherein when the bolt is threaded into a screw hole provided in the mounting seat in a state where the second engagement portion is engaged to the retaining portion, the clamp auxiliary member makes contact with the mounting seat, which restricts the movement to cause a relative movement thereof to the bolt, the first engagement portion is subjected to a force from the large-diameter portion to be expanded in a diameter, the engagement of the second engagement portion is released simultaneously with the diameter expanding of the first engagement portion, the third engagement portion presses the inner peripheral wall of the mounting hole to clamp the cutting insert to the mounting seat, and when the bolt threaded into the screw hole is loosened, the second engagement portion is returned back to the retaining portion by the recovery force. This configuration makes it possible to realize the clamp auxiliary member which is low in manufacturing costs in a simple structure, applicable to a small-diameter tool, and excellent in operability at replacement of the cutting insert.

In addition, the cutting tool in the present invention comprises a cutting insert provided with a mounting hole, a tool body provided with a mounting seat, a bolt for clamping the cutting insert to the mounting seat of the tool body, and a clamp auxiliary member provided with a ring-shaped main body which is, when the cutting insert is clamped to the mounting seat in the tool body by the bolt, interposed between the cutting insert and the bolt to flexibly expand in a diameter therebetween to assist the clamping of the cutting insert by the bolt, wherein the bolt comprises a retaining portion for retaining the clamp auxiliary member and a large-diameter portion for expanding the clamp auxiliary member in a diameter, the clamp auxiliary member comprises a first engagement portion engaged to the large-diameter portion formed in the bolt and expanding the main body in a diameter by a relative movement to the bolt, a second engagement portion capable of being engaged to the retaining portion in the bolt, and a third engagement portion capable of making contact with an inner peripheral wall of the mounting hole in the cutting insert, wherein when the bolt is tightened, the clamp auxiliary member moves together with the bolt in a state where the second engagement portion is engaged to the retaining portion, the clamp auxiliary member makes contact with the mounting seat, which restricts the movement to cause a relative movement thereof to the bolt, thereby the engagement of the second engagement portion is released and the first engagement portion is subjected to a force from the large-diameter portion to be expanded in diameter to clamp the cutting insert to the mounting seat, and when the bolt tightened into the mounting hole in the cutting insert is loosened, the second engagement portion is returned back to the retaining portion by the recovery force. This configuration makes it possible to realize the cutting tool which is low in manufacturing costs in a simple structure, applicable to a small-diameter tool, and excellent in operability at replacement of the cutting insert.

### Brief Description of Drawings

[Fig. 1A] Fig. 1A is a perspective view showing a clamp auxiliary member according to a first embodiment;
[Fig. 1B] Fig. 1B is a plan view showing the clamp auxiliary member according to the first embodiment;
[Fig. 1C] Fig. 1C is a side view showing the clamp auxiliary member according to the first embodiment;
[Fig. 2A] Fig. 2A is a diagram showing a cutting insert and the clamp auxiliary member according to the present embodiment;
[Fig. 2B] Fig. 2B is a diagram showing the cutting insert and the clamp auxiliary member according to the present embodiment;
[Fig. 3A] Fig. 3A is a diagram showing a tool body and the cutting insert mounted to the tool body;
[Fig. 3B] Fig. 3B is a diagram showing the tool body and the cutting insert mounted to the tool body;
[Fig. 3C] Fig. 3C is a diagram showing the tool body and the cutting insert mounted to the tool body;
[Fig. 4A] Fig. 4A is a diagram showing a tool body in which a position of a screw hole for mounting the cutting insert is shifted to a wall side, and the cutting insert mounted to the tool body;
[Fig. 4B] Fig. 4B is a diagram showing the tool body in which the position of the screw hole for mounting the cutting insert is shifted to the wall side, and the cutting insert mounted to the tool body;
[Fig. 4C] Fig. 4C is a diagram showing the tool body in which the position of the screw hole for mounting the cutting insert is shifted to the wall side, and the cutting insert mounted to the tool body;
[Fig. 4D] Fig. 4D is a plan view in Fig. 4C;
[Fig. 5A] Fig. 5A is a diagram showing a modification of the clamp auxiliary member according to the first embodiment;
[Fig. 5B] Fig. 5B is a diagram showing a modification of the clamp auxiliary member according to the first embodiment;
[Fig. 6A] Fig. 6A is a diagram showing a clamp auxiliary member according to a second embodiment;
[Fig. 6B] Fig. 6B is a diagram showing the clamp auxiliary member according to the second embodiment;
[Fig. 6C] Fig. 6C is a diagram showing the clamp auxiliary member according to the second embodiment;
[Fig. 7A] Fig. 7A is a diagram showing a clamp auxiliary member according to a third embodiment;
[Fig. 7B] Fig. 7B is a diagram showing the clamp auxiliary member according to the third embodiment;
[Fig. 7C] Fig. 7C is a diagram showing the clamp auxiliary member according to the third embodiment;
[Fig. 8A] Fig. 8A is a diagram showing a clamp auxiliary member according to a fourth embodiment;
[Fig. 8B] Fig. 8B is a diagram showing the clamp auxiliary member according to the fourth embodiment; and
[Fig. 8C] Fig. 8C is a diagram showing the clamp auxiliary member according to the fourth embodiment.

### Description of Embodiments

### (first Embodiment)

Hereinafter, a first embodiment in the present invention will be described with reference to the drawings.

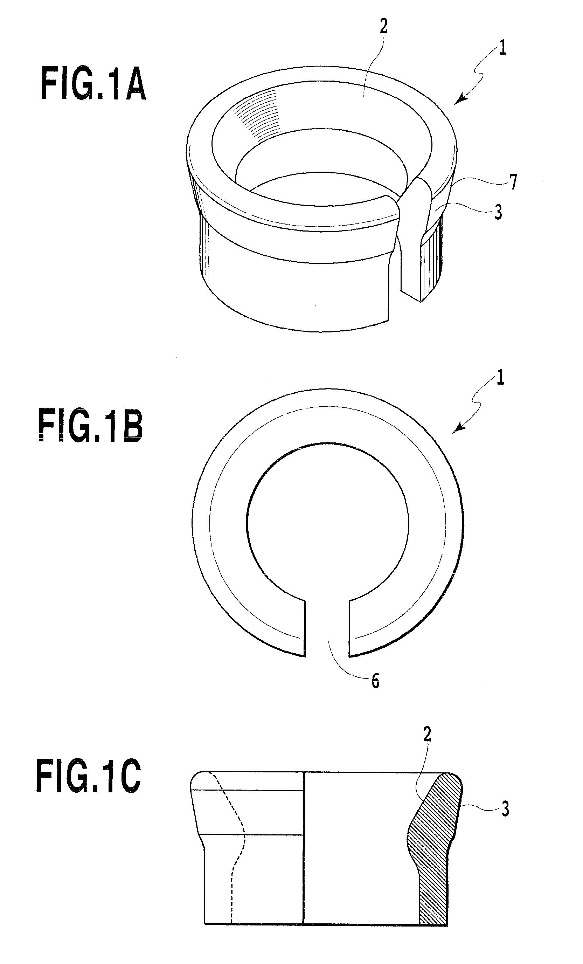

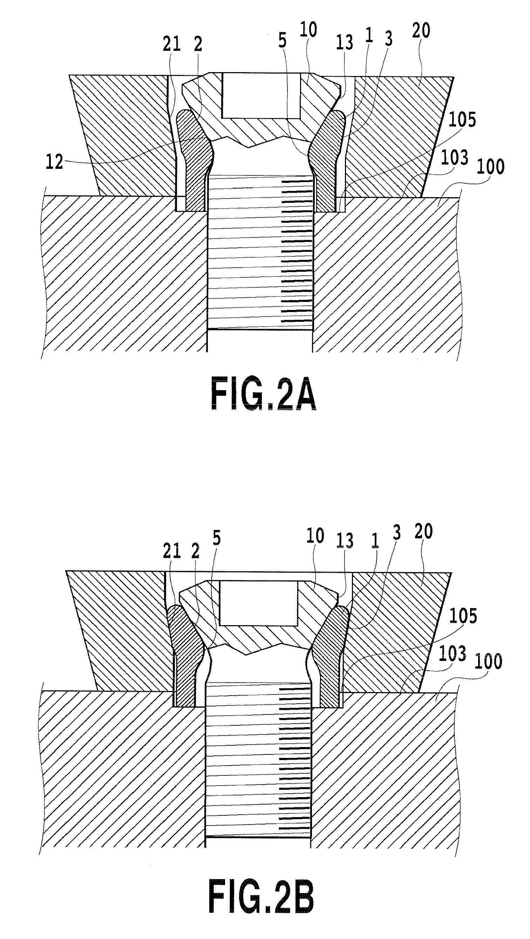

Fig. 1A to Fig. 1C are diagrams each showing a clamp auxiliary member 1 according to the present embodiment, wherein Fig. 1A is a perspective view, Fig. 1B is a plan view, and Fig. 1C is a side view. Fig. 2A and Fig. 2B are diagrams each showing a cutting insert 20 and a clamp auxiliary member 1 according to the present embodiment, wherein Fig. 2A shows a state before tightening a bolt (hereinafter, called also a fastening screw) 10, and Fig. 2B shows a state where the cutting insert 20 is fixed by completely tightening the fastening screw 10. The clamp auxiliary member 1 according to the present embodiment is formed in a substantially cylindrical shape and is provided with a ring-shaped main body 7 a part of which is notched. An inner peripheral face upper portion of the clamp auxiliary member 1 is provided with a first engagement portion (hereinafter, called simply an inclined face) 2 having an inclination substantially equal to that of a head portion outer peripheral face of the fastening screw 10.

In addition, an outer peripheral face upper portion of the clamp auxiliary member 1 is provided with a third engagement portion (hereinafter, called simply an inclined face) 3 having an inclination substantially equal to that of an inclined face 21 of an inner peripheral face of a mounting hole in the cutting insert 20. Further, a notch portion (hereinafter, called also a slit portion) 6 of the clamp auxiliary member 1 forms part of a slit having a height equal to that of the clamp auxiliary member 1 in such a manner as to completely notch a part of the ring-shaped clamp auxiliary member 1.

In view of prevention of attrition to be generated by the rubbing of the clamp auxiliary member 1 with the mounting hole of the cutting insert 20 for each time of replacement of the cutting insert 20, the clamp auxiliary member 1 is formed of a steel material having a thermal treatment hardness of 35HRC or more, for example, carbon steel, alloy steel, stainless steel, dies steel, titanium alloy or the like.

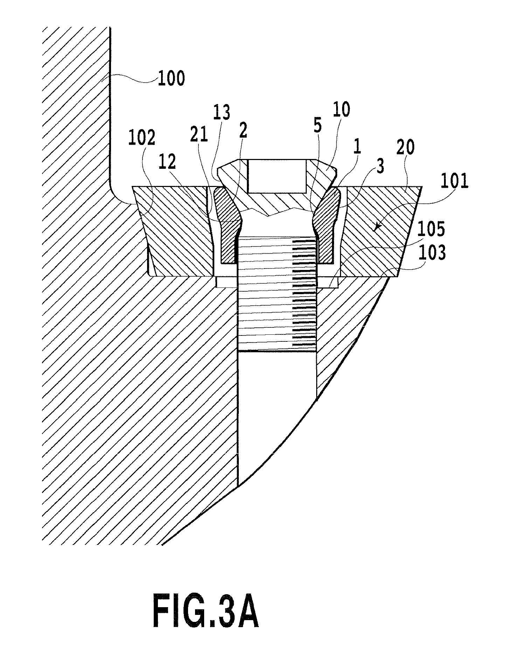

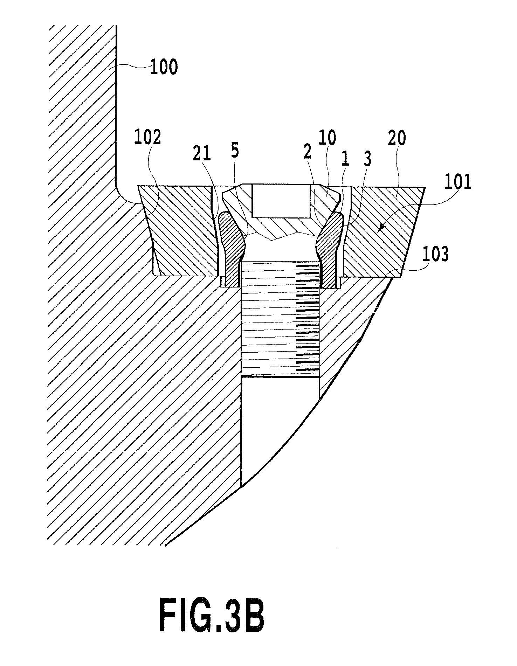

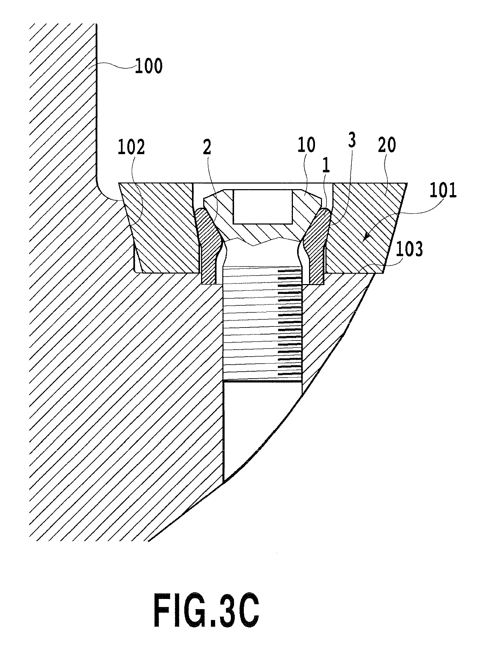

Fig. 3A to Fig. 3C are diagrams each showing a tool body 100 and the cutting insert 20 mounted in tool body 100, wherein Fig. 3A shows a state where the fastening screw 10 is inserted into the mounting hole of the cutting insert 20, Fig. 3B shows a state where the fastening screw 10 is tightened up to the halfway, and Fig. 3C shows a state where the fastening screw 10 is completely tightened up.

The clamp auxiliary member 1 is used upon installing the cutting insert 20 to an indexable cutting tool, and, as shown in Fig. 2A and Fig. 2B, the clamp auxiliary member 1is inserted into the mounting hole of the cutting insert 20 in a state where the fastening screw 10 is inserted. By threading the fastening screw 10 into a screw hole provided in a mounting seat face 103 of the tool body 100 for tightening, the clamp auxiliary member 1 retained in the fastening screw 10 makes contact with a counter bore 105 provided in the mounting seat face 103 of the tool body 100. In addition, when the fastening screw 10 is further tightened up, the clamp auxiliary member 1 is released from a retaining portion of the fastening screw 10, and receives forces in the screw forward direction and the radius expanding direction from an inclined face of an outer peripheral face of a large-diameter portion (hereinafter, called also a head portion) 13 of the fastening screw 10 to expand a slit portion 6, and at the same time, expands in a diameter with elastic deformation to make the inclined face 2 be in contact with the inclined face of the outer peripheral face of the head portion 13 in the fastening screw 10 and to make the inclined face 3 be in contact with the inclined face 21 of the inner peripheral face of the mounting hole in the cutting insert 20, thus fixing the cutting insert 20 to a mounting seat 101 of the tool body 100.

In addition, by loosening the fastening screw 10, the force applied to the clamp auxiliary member 1 by the head 13 of the fastening screw 10 is gradually weakened, and the clamp auxiliary member 1 expanded in a diameter by the elastic deformation following the weakened force contracts in a diameter by a recovery force to be returned back to a state of being retained by the retaining portion of the fastening screw 10. When the elastic deformation of the clamp auxiliary member 1 is back to an original state, an outer peripheral diameter of the clamp auxiliary member 1 is made smaller than an inner peripheral diameter of the mounting hole in the cutting insert 20. Since a head portion outer peripheral diameter of the fastening screw 10 is smaller than the inner peripheral diameter of the mounting hole in the cutting insert 20, when the elastic deformation of the clamp auxiliary member 1 is back to the original state, removal of the cutting insert 20 is made possible, and the cutting insert 20 fixed to the tool body 100 can be released without completely pulling the fastening screw 10 out of the tool body 100.

As described above, when the elastic deformation of the clamp auxiliary member 1 is back to the original state by loosening the fastening screw 10, a retaining portion (hereinafter, called also a small-diameter portion) 12 provided in a lower part of the head portion 13 in the fastening screw 10 is engaged to a second engagement portion (hereinafter, called also a fitting portion) 5 of the clamp auxiliary member 1. Therefore the clamp auxiliary member 1 does not drop down out of the fastening screw 10 even if the fastening screw 10 is completely pulled out of the tool body 100, and can be pulled out at the same time with the fastening screw 10. In this manner, even in a case of completely pulling the fastening screw 10 out of the tool body 100 at the time of removal of the cutting insert 20, it is possible to prevent the clamp auxiliary member 1 from being lost.

As a result, the clamp auxiliary member 1 according to the present embodiment is used, thereby making it possible to perform replacement of the cutting insert 20 simply and easily without completely removing the fastening screw 10 out of the screw hole of the tool body 100. In a milling cutter having many teeth also, the replacement or the like of the cutting insert 20 can be performed in a short time, largely improving operability and work efficiency at the time of removal of the cutting insert 20. Also at the time of removal or the like of the cutting insert 20, since a screwed state between the fastening screw 10 and the tool body is ensured, an operator does not drop or lose the fastening screw. In addition, even if the fastening screw 10 is completely removed from the tool body 100, since the clamp auxiliary member 1 is engaged to the fastening screw 10, it is possible to prevent the clamp auxiliary member 1 from dropping and being lost in a single unit.

In addition, since the clamp auxiliary member 1 according to the present embodiment is not provided with a screw portion or the like, work thereupon is easy and manufacturing costs thereof can be suppressed. It can be applied not only to the large-diameter tool but also to a small-diameter end mill and the like.

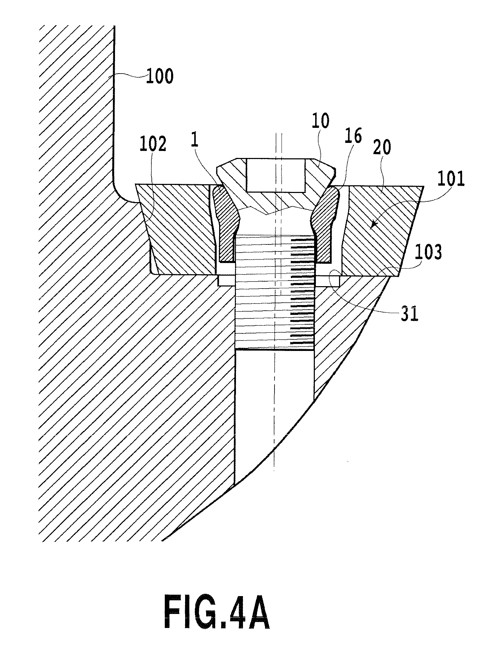

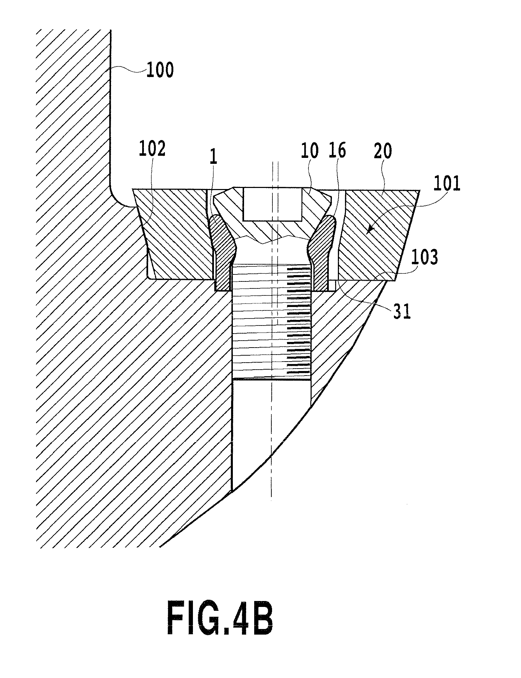

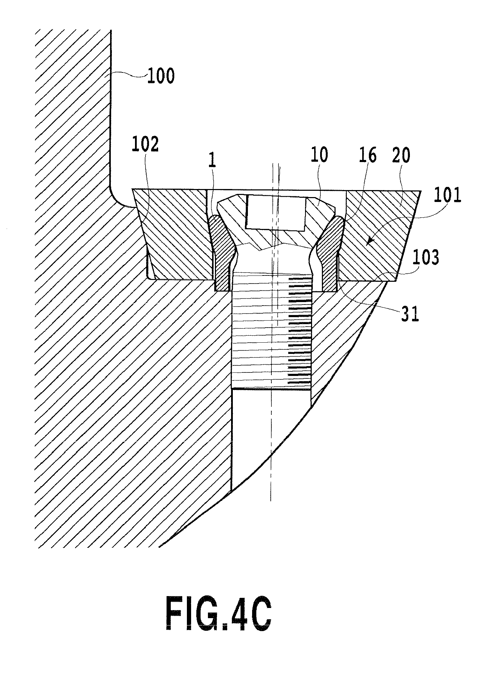

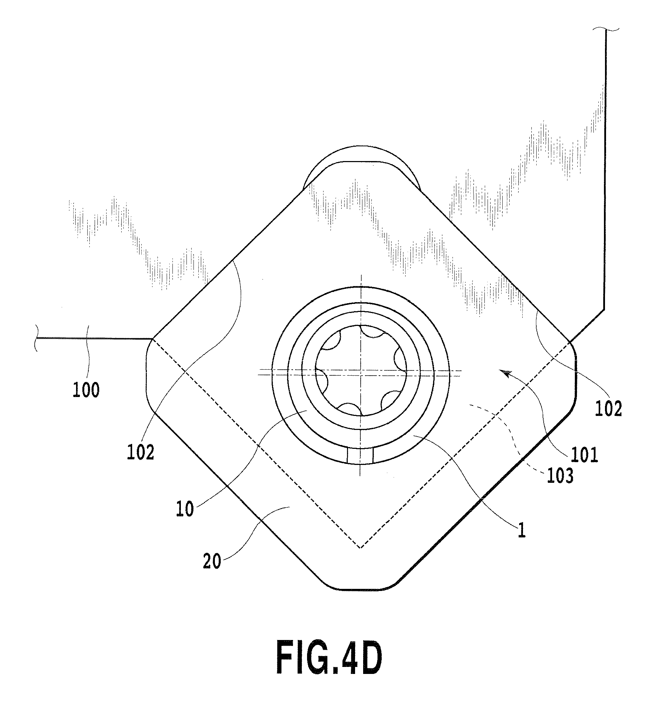

Fig. 4A to Fig. 4D are diagrams each showing the tool body 100 in which a position of a screw hole for mounting the cutting insert 20 is shifted to a wall side, and the cutting insert 20 mounted to the mounting seat 101 of the tool body 100, wherein Fig. 4A shows a state where the fastening screw 10 is inserted into the mounting hole of the cutting insert 20, and Fig. 4B shows a state where the fastening screw 10 is tightened to the halfway, Fig. 4C shows a state where the fastening screw 10 is completely tightened up, and Fig. 4D is a plane view in the state in Fig. 4C.

It is possible to use the clamp auxiliary member 1 according to the present embodiment to be eccentric to the mounting hole of the cutting insert 20. In general, in the indexable cutting tool, for mounting the cutting insert 20, the mounting is performed in such a manner as to press the cutting insert 20 to a wall face 102 of the mounting seat in the tool body 100. Therefore as means for pressing the cutting insert 20 to the wall face 102 of the mounting seat in the tool body 100, a position of the screw hole of the mounting seat face 103 in the tool body 100 is shifted closer to a side of the wall face 102 of the mounting seat.

The clamp auxiliary member 1 according to the present embodiment can be used even if the position of the screw hole of the mounting seat face 103 in the tool body 100 is shifted to the side of the wall surface 102 of the mounting seat. That is, even if the screw hole of the mounting seat face 103 is the eccentric screw hole, since an outer diameter of the clamp auxiliary member 1 is smaller than the mounting hole of the cutting insert 20, a clearance between the inner peripheral face of the mounting hole in the cutting insert 20 and the outer peripheral face of the clamp auxiliary member 1 is generated and the clamp auxiliary member 1 is engaged to the fastening screw 10 in a state where the fastening screw 10 is loosened. Therefore the fastening screw 10 and the clamp auxiliary member 1 move simultaneously. In consequence, the cutting insert 20 can be removed without removing the fastening screw 10 from the tool body 100. For mounting the cutting insert 20, the outer peripheral face of the clamp auxiliary member 1 in a side of the wall face 102 of the mounting seat first makes contact with the inner peripheral face of the mounting hole in the cutting insert 20 following tightening the fastening screw 10, and afterwards by further tightening up the fastening screw 10, the clamp auxiliary member 1 flexibly deforms to expand in a diameter in a direction in reverse to the side of the wall face 102 of the mounting seat. Finally, as shown in Fig. 4C and Fig. 4D, the outer peripheral face of the clamp auxiliary member 1 at the opposite to the side of the wall face 102 of the mounting seat makes contact with the inner peripheral face of the mounting hole in the cutting insert 20 to mount the cutting insert 20 to the screw hole shifted to the side of the wall face 102 of the mounting seat fixing the cutting insert 20 to the mounting seat 101 of the tool body 100. This generates a force for the clamp auxiliary member 1 to press the cutting insert 20 closer to the wall face 102 of the mounting seat, making it possible to inevitably press the cutting insert 20 to the wall face 102 of the mounting seat in the tool body 100.

In this manner, the clamp auxiliary member 1 according to the present embodiment can be mounted even in a state where a center axis of the mounting hole in the cutting insert 20 is shifted out of a center axis of the fastening screw 10.

It should be noted that a fitting section 16 in the outer peripheral side in the uppermost portion of the clamp auxiliary member 1 is preferably chamfered. Along with it, a fitting section 31 in the bottom side of the mounting hole 30 in the cutting insert 20 fitted into the fitting section 16 is also preferably chamfered. In this way, when the fitting section 16 and the fitting section 31 are chamfered, the clamp auxiliary member 1 can be smoothly pressed into the mounting hole 30.

The inner peripheral face upper portion of the clamp auxiliary member 1 is preferably chamfered to be tailored to the configuration of the head portion of the fastening screw 10. For example, in a case where the fastening screw 10 a configuration of the head portion of which is formed in a tapered shape is used, the inner peripheral face in the upper portion of the clamp auxiliary member 1 is preferably chamfered in a tapered shape (inverted conical shape) having an angle substantially equal to the tapered angle of the head portion seat face of the fastening screw 10. When the chamfer tailored to the configuration of the head portion seat face of the fastening screw 10 is formed in the fitting section to the fastening screw in this manner, in a case where the fastening screw 10 is threaded into the screw portion of the tool body 100, contact faces between the inner peripheral face upper portion of the clamp auxiliary member 1 and the head portion of the fastening screw 10 form a state of an entire surface contact, creating excellent tightness. In addition, therefore the attrition in the contact faces between the inner peripheral face upper portion of the clamp auxiliary member 1 and the head portion of the fastening screw 10 can be suppressed. There is no possibility that a groove is generated in the contact face to break the head portion of the fastening screw 10.

### (Modification)

Hereinafter, a modification in the present embodiment will be explained. In the present embodiment, the inclined face 3 of the clamp auxiliary member 1 makes surface contact with the inclined face 21 of the inner peripheral face of the mounting hole in the cutting insert 20, but the present embodiment is not limited thereto. That is, the inclined face 3 of the clamp auxiliary member 1 may be formed in a three-dimensional curved shape to make line contact with the inclined face 21 of the inner peripheral face of the mounting hole in the cutting insert 20.

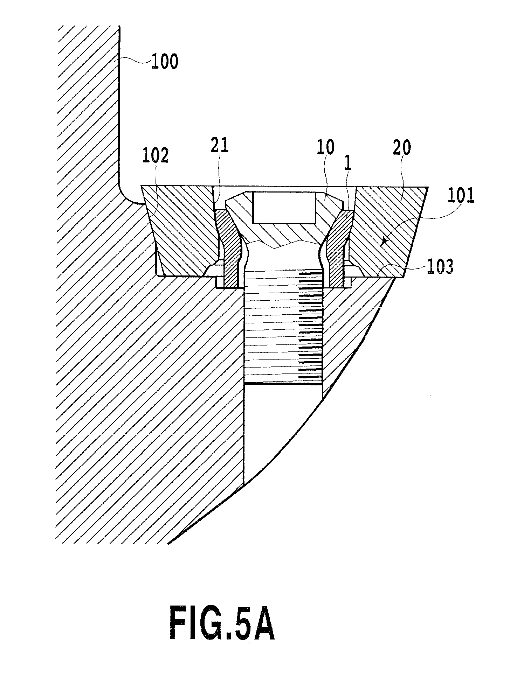

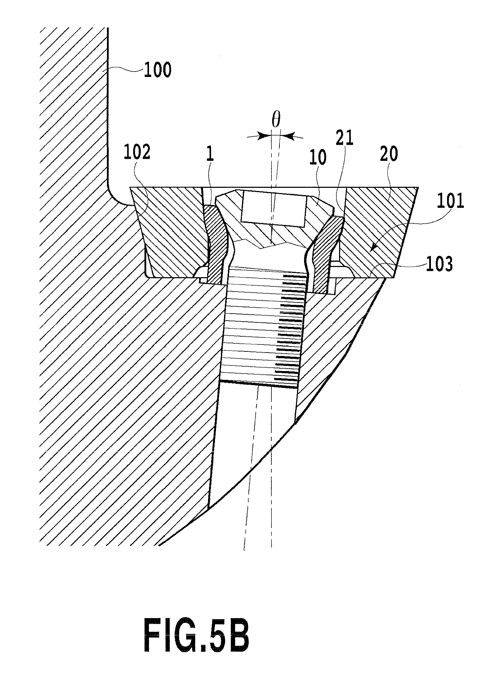

Fig. 5A and Fig. 5B are diagrams each showing a modification of the clamp auxiliary member according to the present embodiment, wherein Fig. 5A shows a state where a screw hole is provided to be perpendicular to the mounting seat face 103 of the tool body 100 for mounting the cutting insert 20, and Fig. 5B shows a state where the screw hole is provided to be inclined at an angle θ to a perpendicular line to the mounting seat face 103 of the tool body 100 for mounting the cutting insert 20. In the clamp auxiliary member 1 according to the modification in the present embodiment, an outer peripheral face thereof making contact with the inner peripheral face of the mounting hole in the cutting insert 20 is formed in a three-dimensional curved surface, and the outer periphery of the clamp auxiliary member 1 makes line contact with the inclined face 21 of the inner peripheral face of the mounting hole in the cutting insert 20. Therefore, as shown in Fig. 5A, even in a case of providing the screw hole of the fastening screw 10 to be perpendicular to the mounting seat face 103 of the tool body 100, and as shown in Fig. 5B, even in a case of providing the screw hole of the fastening screw 10 to inclined to the mounting seat face 103 of the tool body 100, the cutting insert 20 can mounted to the tool body 100 by stable contact therebetween. As shown in Fig. 5B, since the configuration, in which the screw hole of the fastening screw 10 is provided to be inclined to the mounting seat face 103 of the tool body 100, effectively produces the force for the clamp auxiliary member 1 to press the cutting insert 20 closer to the wall 102, the configuration is effective as means for pressing the aforementioned cutting insert 20 to the mounting seat face 102 of the tool body 100.

In this manner, the cutting insert is mounted to the tool body through the clamp auxiliary member which is provided with the engagement portion with the fastening screw, is formed in a ring-shape a part of which is completely notched, and is flexibly deformed at the time the force is applied to the inner peripheral face upper portion thereof from the head portion of the fastening screw to expand the outer diameter. This configuration makes it possible to realize the clamp auxiliary member which is low in manufacturing costs in a simple structure, applicable to a small-diameter tool, and excellent in operability at replacement of the cutting insert, and the cutting tool provided with the clamp auxiliary member.

### (Second Embodiment)

Hereinafter, a second embodiment in the present invention will be explained with reference to the drawings. Since the basic configuration in the present embodiment is similar to that in the first embodiment, hereinafter only the characteristic configuration will be explained.

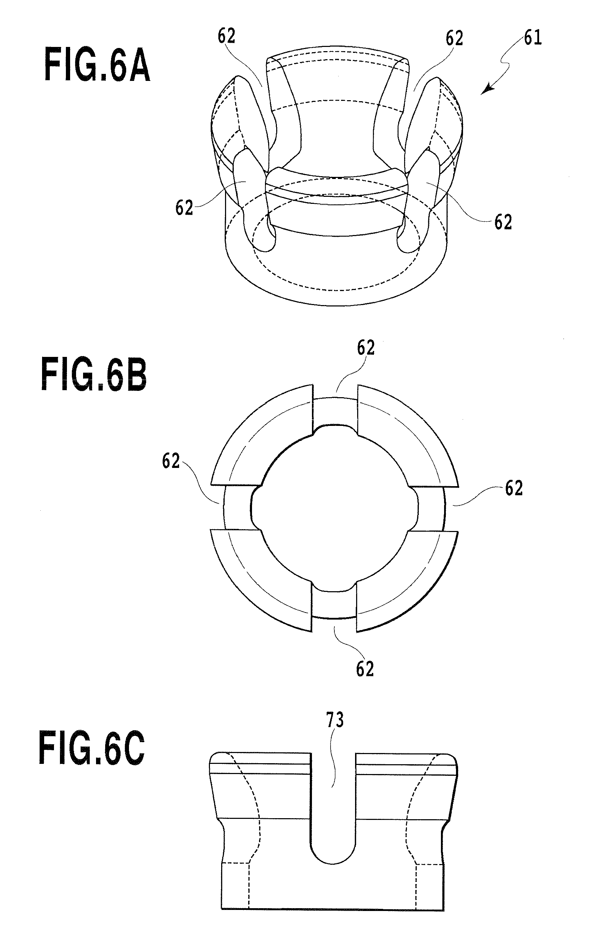

Fig. 6A to Fig. 6C are diagrams each showing a clamp auxiliary member 61 according to the present embodiment, wherein Fig. 6A is a perspective view, Fig. 6B is a plan view, and Fig. 6C is a side view. The clamp auxiliary member 61 according to the present embodiment is formed in a ring shape, but is not provided with the slit portion 6 (refer to Fig. 1B) formed by completely notching a part of the clamp auxiliary member as shown in the first embodiment, and is provided with four slit portions 62 in positions respectively shifted by about 90 degrees, the slit portion 62 being formed by notching the clamp auxiliary member from the upper portion to a substantially central portion in the height direction as shown in Fig. 6A. Even if the slit formed by completely notching the part thereof is not used in the same way as the clamp auxiliary member 61 in the present embodiment, the elastic deformation of the clamp auxiliary member 61 can be obtained at the time of tightening the fastening screw 10 and the cutting insert 20 can be fixed to the tool body 100.

It should be noted that the number of the slit portions is not limited to four, but one or more slit portions 61 being formed by notching the clamp auxiliary member from the upper portion to the substantially central portion as the present embodiment are only required to be provided.

In this manner, the cutting insert is mounted to the tool body through the clamp auxiliary member which is formed in a ring shape, is provided with the engagement portion with the fastening screw, is provided with one or more slit portions 62 formed by notching the clamp auxiliary member from the upper portion to the substantially central portion in the height direction, and is flexibly deformed at the time the force is applied to the inner peripheral face upper portion thereof from the head portion of the fastening screw to expand the outer diameter. This configuration makes it possible to realize the clamp auxiliary member which is low in manufacturing costs in a simple structure, applicable to a small-diameter tool, and excellent in operability at replacement of the cutting insert 20, and the cutting tool provided with the clamp auxiliary member.

### (Third Embodiment)

Hereinafter, a third embodiment in the present invention will be explained with reference to the drawings. Since the basic configuration in the present embodiment is similar to that in the first embodiment, hereinafter only the characteristic configuration will be explained.

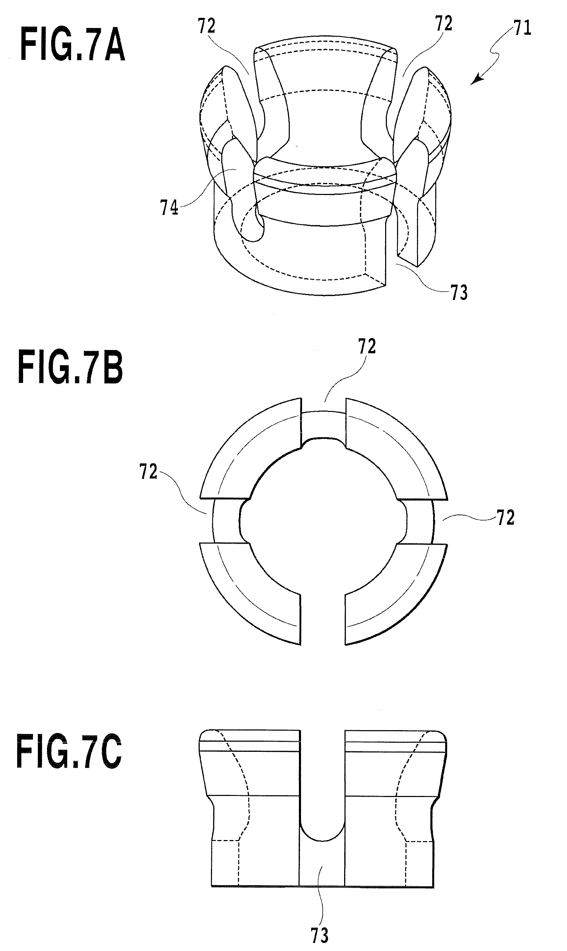

Fig. 7A to Fig. 7C are diagrams each showing a clamp auxiliary member 71 according to the present embodiment, wherein Fig. 7A is a perspective view, Fig. 7B is a plan view, and Fig. 7C is a side view. The clamp auxiliary member 71 according to the present embodiment includes both of the configuration in the first embodiment and the configuration in the second embodiment, and is provided with a slit portion 73 formed by completely notching a part of the clamp auxiliary member 71 and a plurality of slit portions 72 formed by notching the clamp auxiliary member from an upper portion to a substantially central portion in the height direction. Even in the configuration of the clamp auxiliary member 71 in the present embodiment, the elastic deformation of the clamp auxiliary member 71 can be obtained at the time of tightening the fastening screw 10 and the cutting insert 20 can be fixed to the tool body 100.

It should be noted that the number of the slit portions formed by notching the clamp auxiliary member from the upper portion to the substantially central portion in the height direction is not limited to three, but it is only required to provide one or more slit portions 72 formed by notching the clamp auxiliary member from the upper portion to the substantially central portion as the present embodiment and the slit portion 73 formed by completely notching the part of the clamp auxiliary member.

In this manner, the cutting insert 20 is mounted to the tool body 100 through the clamp auxiliary member which is provided with the engagement portion with the fastening screw, is formed in a ring shape completely notching the part of the clamp auxiliary member, is provided with one or more slit portions 72 formed by notching the clamp auxiliary member from the upper portion to the substantially central portion in the height direction, and is flexibly deformed at the time the force is applied to the inner peripheral face upper portion thereof from the head portion of the fastening screw to expand the outer diameter. This configuration makes it possible to realize the clamp auxiliary member which is low in manufacturing costs in a simple structure, applicable to a small-diameter tool, and excellent in operability at replacement of the cutting insert, and the cutting tool provided with the clamp auxiliary member.

### (Fourth Embodiment)

Hereinafter, a fourth embodiment in the present invention will be explained with reference to the drawings. Since the basic configuration in the present embodiment is similar to that in the first embodiment, hereinafter only the characteristic configuration will be explained.

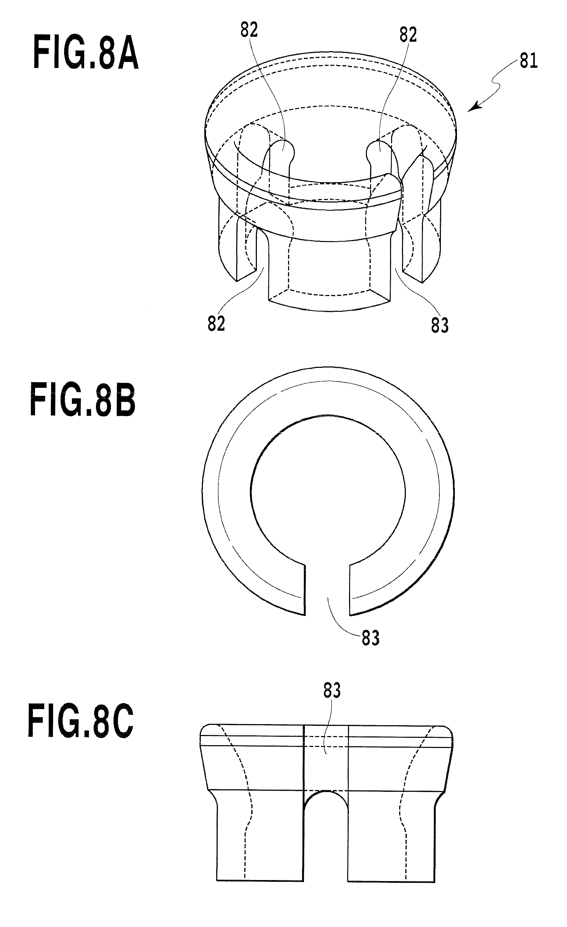

Fig. 8A to Fig. 8C are diagrams each showing a clamp auxiliary member 81 according to the present embodiment, wherein Fig. 8A is a perspective view, Fig. 8B is a plan view, and Fig. 8C is a side view. The clamp auxiliary member 81 according to the present embodiment is similar to the configuration in the third embodiment, but differs in a point of being provided with a plurality of slit portions 82 formed by notching the clamp auxiliary member from a lower portion to a substantially central portion in the height direction. A point where a slit portion 83 formed by completely notching a part of the clamp auxiliary member 81 is provided is the same as in the third embodiment. Even in the configuration of the clamp auxiliary member 81 in the present embodiment, the elastic deformation of the clamp auxiliary member 81 can be obtained at the time of tightening the fastening screw 10 and the cutting insert 20 can be fixed to the tool body 100.

It should be noted that the number of the slit portions 82 formed by notching the clamp auxiliary member from the lower portion to the substantially central portion in the height direction is not limited to three, but it is only required to provide one or more slit portions 82 formed by notching the clamp auxiliary member from the lower portion to the substantially central portion as the present embodiment and the slit portion 83 formed by completely notching the part of the clamp auxiliary member.

In this manner, the cutting insert is mounted to the tool body through the clamp auxiliary member which is provided with the engagement portion with the fastening screw, is formed in a ring shape completely notching the part of the clamp auxiliary member, is provided with one or more slit portions formed by notching the clamp auxiliary member from the lower portion to the substantially central portion in the height direction, and is flexibly deformed at the time the force is applied to the inner peripheral face upper portion thereof from the head portion of the fastening screw to expand the outer diameter. This configuration makes it possible to realize the clamp auxiliary member which is low in manufacturing costs in a simple structure, applicable to a small-diameter tool, and excellent in operability at replacement of the cutting insert, and the cutting tool provided with the clamp auxiliary member. Reference Signs List

- 1: Clamp auxiliary member
- 2: Inclined face
- 3: Inclined face
- 6: Slit portion
- 7: Main body
- 10: Fastening screw
- 13: Head portion
- 16: Fitting section
- 20: Cutting insert
- 21: Inclined face
- 31: Fitting section
- 61: Clamp auxiliary member
- 62: Slit portion
- 71: Clamp auxiliary member
- 72: Slit portion
- 73: Slit portion
- 81: Clamp auxiliary member
- 82: Slit portion
- 83: Slit portion
- 100: Tool body
- 101: Mounting seat
- 102: Wall face of a mounting seat
- 103: Mounting seat face
- 105: Counter bore

## Claims

1. A clamp auxiliary member including a ring-shaped main body which, when a cutting insert provided with a mounting hole formed therein is clamped to a mounting seat in a tool body by a bolt inserted into the mounting hole, expands in a diameter between the cutting insert and the bolt to press the cutting insert from an inside thereof, thereby assisting the clamping of the cutting insert by the bolt, the clamp auxiliary member comprising:
a first engagement portion engaged to a large-diameter portion formed in the bolt and expanding the main body in a diameter by a relative movement to the bolt;
a second engagement portion capable of being engaged to a retaining portion provided in the bolt; and
a third engagement portion applying a pressing force to an inner peripheral wall of the mounting hole, wherein
when the bolt is threaded into a screw hole provided in the mounting seat in a state where the second engagement portion is engaged to the retaining portion,
the clamp auxiliary member makes contact with the mounting seat, which restricts the movement to cause a relative movement thereof to the bolt,
the first engagement portion is subjected to a force from the large-diameter portion to be expanded in a diameter,
the engagement of the second engagement portion is released simultaneously with the diameter expanding of the first engagement portion,
the third engagement portion presses the inner peripheral wall of the mounting hole to clamp the cutting insert to the mounting seat, and
when the bolt threaded into the screw hole is loosened, the second engagement portion is returned back to the retaining portion by the recovery force.

2. A clamp auxiliary member defined in claim 1, wherein
the third engagement portion is formed to be capable of allowing at least one of eccentricity between a center axis line of the cutting insert and a center axis line of the screw hole in the mounting seat, and an inclination of the center axis line of the screw hole to a center axis line of the mounting hole in the cutting insert fixed to the mounting seat.

3. A clamp auxiliary member defined in claim 2, wherein
the third engagement portion is formed as a curved surface curved in a convex shape to the inner peripheral wall of the mounting hole in the cutting insert.

4. A cutting tool comprising:
a cutting insert provided with a mounting hole;
a tool body provided with a mounting seat;
a bolt inserted into the mounting hole of the cutting insert for clamping the cutting insert to the mounting seat of the tool body; and
a clamp auxiliary member provided with a ring-shaped main body which is, when the cutting insert is clamped to the mounting seat in the tool body by the bolt, interposed between the cutting insert and the bolt to flexibly expand in a diameter therebetween to assist the clamping of the cutting insert by the bolt, wherein
the bolt comprises:
a retaining portion for retaining the clamp auxiliary member in a state where the clamp auxiliary member is not expanded in a diameter; and a large-diameter portion for expanding the clamp auxiliary member in a diameter, and
the clamp auxiliary member comprises:
a first engagement portion engaged to the large-diameter portion formed in the bolt and expanding the main body in a diameter by a relative movement to the bolt;
a second engagement portion capable of being engaged to the retaining portion in the bolt; and
a third engagement portion capable of making contact with an inner peripheral wall of the mounting hole in the cutting insert at the time of being expanded in a diameter by the large-diameter portion, wherein
when the bolt is tightened,
the clamp auxiliary member moves together with the bolt in a state where the second engagement portion is engaged to the retaining portion,
the clamp auxiliary member makes contact with the mounting seat, which restricts the movement to cause a relative movement thereof to the bolt, thereby the engagement of the second engagement portion is released and the first engagement portion is subjected to a force from the large-diameter portion to be expanded in a diameter to clamp the cutting insert to the mounting seat, and
when the bolt tightened into the mounting hole in the cutting insert is loosened, the second engagement portion is returned back to the retaining portion by the recovery force.
